# EUROPÄISCHE PATENTANMELDUNG

(11) **EP 3 509 267 A1**
(43) Veröffentlichungstag der Anmeldung: **10.07.2019**
(21) Anmeldenummer: 18150415.0
(22) Anmeldetag: 05.01.2018
(51) Int. Cl.: H04L 29/06, H04L 29/08

(54) **PRIMÄRE SICHERUNGSKETTENANORDNUNG FÜR PRODUKT- UND SYSTEMSICHERHEIT IN DATENNETZEN**

(71) Anmelder: Firnkorn, Thomas, 71543 Wüstenrot (DE)
(72) Erfinder: WINKLER, Richard Dr., 71336 Waiblingen (DE)
(74) Vertreter: Maiwald Patent- und Rechtsanwaltsgesellschaft mbH

(57) **Zusammenfassung**

Die Erfindung betrifft eine Clientvorrichtung (100) für eine primäre Sicherungskettenanordnung, wobei die Clientvorrichtung (100) umfasst: eine Verschlüsselungseinrichtung (110), welche dazu ausgebildet ist, Eingangsdaten in eine Mehrzahl an Datenblöcken aufzuteilen und jeden einzelnen Datenblock der Mehrzahl der Datenblöcke mit Hilfe von: einem öffentlichen Schlüssel einer Serveranordnung (1000) ; einem geheimen Schlüssel der Clientvorrichtung; und einer zufallsgenerierte Zählnummer zu verschlüsseln und darauf basierend einen Ciphertext zu generieren; und eine Sendereinrichtung (120), welche mit der Verschlüsselungseinrichtung (110) gekoppelt ist und welche dazu ausgebildet ist, für den Ciphertext eine Speicherzeitsynchronisierung zu generieren und den Ciphertext mit der generierten Speicherzeitsynchronisierung an die Serveranordnung (1000) über eine Internetverbindung zu versenden.

## Beschreibung

### Technisches Gebiet

Die vorliegende Erfindung betrifft primäre Sicherungskettenanordnungen für hochsichere und hochverfügbare Produkt- und Systemsicherheit im Internet der Dinge unter Anwendung von disruptiven Informations- und Kommunikationstechnologien sowie von Cloud-Diensten.

Insbesondere betrifft die vorliegende Erfindung eine Clientvorrichtung für eine primäre Sicherungskettenanordnung, eine Serveranordnung für eine primäre Sicherungskettenanordnung sowie ein entsprechendes Clientverfahren und ein entsprechendes Serververfahren.

### Technischer Hintergrund

Cyberkriminalität ist eine rasch wachsende Bedrohung für Unternehmen, Organisationen und Personen auf der ganzen Welt. Laut der internationalen Kriminalpolizei-Organisation, Interpol, verursacht Cyberkriminalität jährlich etwa 750 Milliarden Euro Schaden in Europa.

Angetrieben von Megatrends wie etwa dem Internet der Dinge, auf Englisch "Internet of Things", abgekürzt IoT, oder auch Industrie 4.0 und oder Cloud Computing - auf Deutsch "Rechnerwolke" - wird die Anzahl der Cyber-Attacken und der Schaden, den sie erzeugen, auch in Zukunft exponentiell wachsen.

Experten prognostizieren, dass bis zum Jahre 2020 über 200 Milliarden intelligente Geräte über das Internet verbunden sein werden, einschließlich der Mobilen Computer, Autos, Flugzeuge, Häuser, Städte, Fabriken und sogar Tiere.

Einerseits erhöhen diese disruptiven Trends die zukünftigen Speicheranforderungen für Daten erheblich - es wird erwartet, dass das globale Datenvolumen von heute 4,4 Zettabytes, ZB, auf 44 Zettabytes im Jahr 2020 steigt, sprich um das Zehnfache, andererseits wird dies auch zu gigantischen Sicherheitsrisiken führen.

Heute sind etablierte Speicher-Programmierbare Steuerungen, abgekürzt SPS, sowie intelligente Elektronikbausteine und auch etwa beispielsweise zentrale Motorsteuerungen weitgehend ungeschützt in Fahrzeugen, Medizinischen Geräten, Maschinen- und sonstigen Anlagen im Einsatz. Die aktuellen elektronischen, vernetzen Steuerungen werden daher im ungeschützten Zustand mehr und mehr das Ziel der Computerkriminalität.

Es zeigt sich, dass Hacker beispielsweise über die als "On Air" bezeichneten Schnittstelle bzw. Luftschnittstelle, auch Funkschnittstelle, etwa Long Term Evolution (kurz LTE, der Mobilfunkstandard der dritten Generation, Wireless LAN, oder sonstige drahtlose Schnittstellen, leichter eine Steuerung angreifen können als dass sie die Firewalls und die Sicherheitssysteme der Rechenzentren über eine Drahtverbindung zu überlisten.

Oft werden offene Service Ports oder standardisierte Ports an solchen Steuerungen von Hackern genutzt, um in das Firmennetz oder Krankenhausnetz oder in das Fahrzeugnetz einzudringen, um etwa Schaden an der Datenverarbeitung anzurichten oder Erpressungsversuche zu platzieren.

Die Ursache liegt meist darin, dass die technische Architektur der intelligenten Steuerungen heute sehr verschachtelt ist und unterschiedliche Zugänge von außen aufweisen. Diese Zugänge machen es den Hackern leicht einzudringen.

Heute verfügbare Cloud Lösungen und Cloud Services - Rechenzentren, die hoch standardisierte, vollautomatische Rechenschritte und Operationen anbieten - sind nicht ausreichend sicher und es fehlt die Echtzeit in dezentralen vernetzen Data Centern.

Das führt aufgrund unterschiedlicher und nicht beherrschbaren Latenzzeiten in den TCP/IP Netzen zu Dateninkonsistenz. Dateninkonsistenz ist im sogenannten "Enterprise Computing" - Massendatenverarbeitung in kommerziellen Anwendungen - nicht vorstellbar und führt zu Datenverlusten und damit zu hohen Kosten und Schäden.

Die erfindungsgemäße Lösung "Prime Secure Chain" - primäre Sicherungskettenanordnung - soll diese Nachteile beheben.

Die etablierte Praxis zum Schutz vor Cyberattacken besteht heute aus Firewalls, Virenscannern, Malwarescanner, und entsprechenden Sicherheitsmethoden, sogenannten "Security Policies" für die Mitarbeiter und Anwender von Informations- und Kommunikationstechnik, auch Informations- und Kommunikationstechnologie, Services, abgekürzt IKT- Services.

Diese Techniken zur Abwehr von äußeren Angriffen sind endlich in der Reichweite und begrenzt in der Systemschutzdauer und daher nicht mehr ausreichend.

Die zukünftigen Sicherheitssysteme werden viel mehr die innere Sicherheit verbessern müssen, mit anderen Worten ausgedrückt, systemisch wirken und immanent und permanent sein.

Ferner sollten zukünftigen Sicherheitssysteme unabhängig sein und unabhängig von äußeren Angriffen funktionieren.

D.h. die gespeicherten Daten, sowie die Kommunikation werden bereits im Kern der Dateien mit disruptiven Technologien so geschützt, dass trotz der Anwesenheit von Hackern die Daten und Kommunikationswegen geschützt und nicht veränderbar sind.

Autonomes Fahren, Autonome digitale Geschäftsbeziehungen und die völlig ohne den Menschen stattfindende Vernetzung von intelligenten Geräten erfordert exakt solche neuen Verfahren, um eine echte Ende-zu-Ende Sicherheit mit einer eindeutigen Identifikation und Authentifikation aller Teilnehmer zu erreichen.

### Zusammenfassung der Erfindung

Es ist eine Aufgabe der vorliegenden Erfindung, eine verbesserte primäre Sicherungskettenanordnung für Produkt- und Systemsicherheit bereitzustellen.

Diese Aufgabe wird durch die Gegenstände der unabhängigen Patentansprüche gelöst. Ausführungsformen und Weiterbildungen sind den abhängigen Patentansprüchen, der Beschreibung und den Figuren zu entnehmen.

Das erfindungsgemäße System, eine primäre Sicherungskettenanordnung etwa für Produkt- und Systemsicherheit im Internet der Dinge, nachfolgend auch "Prime Secure Chain" genannt, ist ein integrierter Verbund von Systemkomponenten. Das erfindungsgemäße System ermöglicht erstmals die Anwendung von standardisierten IKT Technologien und Cloud Computing Services im industriellen Umfeld der Produkt- und Systemsicherheit - beispielsweise auch durch die Komponenten "Digital Product Secure", abgekürzt DPS, und "Digital Product Lifecycle Secure", abgekürzt DPLS.

Die Erfüllung von Maßnahmen zur Einhaltung von der Produkthaftung und Corporate Governance Regeln - bezeichnet den Ordnungsrahmen für die Leitung und Überwachung von Unternehmen - werden erstmals nachvollziehbar und komplett von der Erstauslieferung bis zur Verschrottung eines Produktes ermöglicht.

Das erfindungsgemäße System ermöglicht eine Sicherheit beim Endgerät und für Endgerätverbindungen, End-to-end security. Ferner gibt es keinen vielversprechenden Angriffspunkt, auch als "no single point of attack" bezeichnet.

Die enorme Datenmenge steht den Herstellern und Prüfunternehmen erstmals lückenlos für Datenanalyse oder auch eine Datenverkehrsanalyse - auch Analytics genannt - zur Verfügung und erfüllt somit Standards für die Produkthaftung.

Die Methoden und Verfahren der vorliegenden Erfindung laufen im Hintergrund ab und tangieren, daher den Anwender nicht.

Prime Secure Chain ist ein integriertes hochsicheres Informationsframework, basierend auf einem Cloud Storage System für Hochverfügbarkeit und höchste IKT-Sicherheit in kommerziellen IKT-Anwendungen und zukünftigen IoT-Lösungen, eingebunden zum Beispiel in Referenzarchitekturen des Edge Computing und/oder die Referenzarchitektur für Industrie 4.0, RAMI 4.0, oder auch Industrie 4.0 selbst.

Edge Computing bezeichnet im Gegensatz zum sogenannten "Cloud Computing" die dezentrale Datenverarbeitung am Rand des Netzwerks, der sogenannten Edge, engl. für Rand oder Kante, auch dezentrale, intelligente Daten-(Vor)-Verarbeitung der Endgeräte.

Das Prime Secure Chain Framework stellt Lösungen für mehr Sicherheit im Internet der Dinge bereit und soll neben der Produktsicherheit auch die sichere Verwaltung und den sicheren Transport kritischer Produktlebenszyklus, auf Englische "Produkt-Lifecycle"-Daten ermöglichen.

Die vorliegende Prime Secure Chain Verbundlösung - d.h. das Gesamtsystem umfassend die Clientvorrichtungen und Serveranordnungen der vorliegenden Erfindung für eine primäre Sicherungskettenanordnung - umfasst beispielsweise folgende Komponenten:

Für das Backend - Serveranordnung - werden beispielsweise folgende Komponenten verwendet:
i) Vorrichtungen und Rechnereinrichtungen für Server/Rechnernetzwerk, etwa in Form eines so auf Englisch derart bezeichneten "Integrated Product Secure Network", abgekürzt IPSN, ferner kann ein logischer Ring in Form eines peer-to-peer Ringnetzwerks realisiert werden, welcher auf dem IPSN basiert;
ii) Secure Cloud Storage Systeme, das eine Digital Secure Product Lifecycle Data Base beinhaltet. Es umfasst beispielsweise Datenbänke und nutzt freie Speicherkapazitäten, die sonst kostentreibend und ohne Nutzung sind; und
iii) Vorrichtungen und Rechnereinrichtungen für "Machine Data" und "Big Data Analytics".

Für das Frontend werden beispielsweise folgende Komponenten verwendet:
i) Universelle Clients; und
ii) Industrielle und/oder IoT-Clients, welche die Module "digitale Produktsicherheit, "Digital Product Secure", DPS, und die digitale Sicherheit des Produktlebenszykluses "Digital Product Lifecycle Secure", DPLS, beinhalten.

Im Folgenden werden die Komponenten des Endgeräts, auch edge, und deren Funktionen beschrieben:

### Universeller Client

Der Client beinhaltet im Wesentlichen folgende Intelligenz für die sichere Datenkommunikation, Verschlüsselung und sicherer Zugang mit Authentifizierung:

Daten (z.B. Stücklisten neuer Produkte) die im Client entstehen, werden beim Speichern nicht auf der Festplatte des Clients gespeichert, sondern sofort in Datenblöcke aufgeteilt. Jeder Datenblock wird dreifach verschlüsselt und gegen Mustererkennung durch einen Nonce - zufallsgenerierte Zählnummer- geschützt. Die so gesicherten Datenblöcke werden sicher über unsichere und vermaschte Wege im Internet zu dem Backend, dem Integrated Product Secure Network übertragen und dort gespeichert.

Die in Prime Secure Chain System verwendete Krypto-Technologie basiert auf der NaCl Bibliothek des Krypto-Experten Daniel J. Bernstein. Die Crypto box ist der Kern der NaCl-Bibliothek und benötigt den 'Plaintext' (zu verschlüsselnde Nachricht oder Dateiblock), den PublicKey des Empfängers, den PrivateKey des Senders, sowie einer Nonce (Number used Once) zur Verschlüsselung mittels asymmetrischem 256 Bit ECDH (Elliptic Curve Diffie-Hellman).

Zunächst wird mit Hilfe des 32 Byte PublicKey des Empfängers (Bob) ein 32 Byte (256 Bit) symmetrischer Schlüssel ksym abgeleitet, der anschließend zur Verschlüsselung des Plaintext mittels des symmetrischen Salsa20 verwendet wird. Bei Salsa20 handelt es sich um eine Streamcipher, der vier Mal performanter ist als der normalerweise verwendeten AES Algorithmus.

Dieser symmetrische Schlüssel wird für jede Nachricht bzw. jeden Block einer Datei neu berechnet und unterscheidet sich durch die 24 Byte lange Nonce immer von den vorherigen Versionen. Somit wird ein "Mitleser" stets unterschiedliche verschlüsselte Informationen desselben Textes erhalten und ein "mitlesen" erheblich erschwert.

Nach der Verschlüsselung wird der Cipher gebildet aus mit ksym verschlüsseltem Plaintext, asymmetrisch verschlüsselten ksym und Nonce. Die einzelnen so verschlüsselten Datenätze werden geteilt in Blöcke und die Blöcke einer Datei werden auf dem Storage-Ring verteilt und stehen zum Abruf bereit.

Beim Benutzer wird der Cipher über die crypto box- Funktionen analog der Verschlüsslungssystematik entschlüsselt, also aus dem Cipher werden die Bestandteile extrahiert, dann wird der verschlüsselte ksym mit seinem eigenen geheimen Datensatz bzw. der Dateiblock entschlüsselt und man erhält den Plaintext.

Mit anderen Worten ausgedrückt, die Datenblöcke werden über das Internet ins Ringnetzwerk transferiert. Die Datenblöcke werden dabei zuvor 3-fach verschlüsselt.

Das oben angeführte Verfahren wird beispielsweise in allen Prime Secure Chain-Clients verwendet, um die Ende-zu-Ende Verschlüsselung zu implementieren.

Neben der Prime-Secure-Chain-Knoten Software (Backend) sind folgende kommerziellen Clients in unterschiedlichen Ausprägungen verfügbar.
- Prime-Secure-Chain ftp - sicherer File-Transfer
- Prime-Secure-Chain sync - sichere Dateisynchronisation auf mehreren Endgeräten
- Prime-Secure-Chain sync2 - sichere Dateisynchronisation auf industriellen Endgeräten
- Prime-Secure-Chain share - sicheres Teilen von Dokumenten
- Prime-secure-Chain fs - sicheres Dateisystem für Mac und Linux
- Prime-Secure-Chain web - Web-Oberfläche (Firefox, Safari, IE, ...), die die verschiedenen Clients integriert und sichere Chat-Funktionalität anbietet
- Prime-Secure-Chain im sicheren Messenger für IOS und Android.

### Industrieller und/oder IoT-Client

Der industrielle und/oder IoT-Client verfügt über Erweiterungen zu universellen Client und läuft auf eingebetteten Systemen (auch englisch embedded system u.a. unter embedded Linux).

Das eingebettete System ist beispielsweise ein elektronischer Rechner oder auch Computer, der in einen technischen Kontext eingebunden (eingebettet) ist. Er ist für Realtime Anwendungen geeignet.

Prime-Secure-Chain Industrial und/oder IoT-Clients sind dabei die Intelligenz in den eingebetteten Systemen und können die ankommenden Daten aufnehmen, vorverarbeiten, klassifizieren und komprimieren, dies kann dann auch per intelligenter Datenvorverarbeitung realisiert werden, auch als "Edge Computing" bezeichnet.

Der Industrielle und/oder IoT-Client beinhaltet das Modul / die Funktionalität DPS Digital Product Secure. Dabei werden die Originalfunktionsdaten beim Auslieferungsdatum eines Produktes auf dem Client in der Steuerung gespeichert.

Gleichzeitig erzeugt der Client eine erste, unveränderbare Kopie der Funktionsdaten in Form eines Product Secure Zertifikates, das in der Steuerung auf einem WORM Speicher unveränderbar gespeichert wird.

DPS fragt beispielsweise bei jedem Start und nach jeder Veränderung (Service und Wartung) auf dem Client in der Steuerung ab, inwieweit Original Funktionsdaten und das Secure Zertifikat identisch sind. Stellt DPS eine Abweichung fest, erzeugt DPS Fehlermeldungen und das Gerät kann nicht gestartet und nicht genutzt werden.

Die zweite identische Kopie des Secure Zertifikates wird durch das Modul Digital Produkt Lifecycle Secure (DPLS) über die oben beschriebene sichere Blockbildung und Verschlüsselung zum Backend transportiert und unter dem identifizierenden Merkmal (z. B. Fahrgestellnummer oder sonstige Identifikationsmerkmale) im Secure Cloud Storage System gespeichert.

Damit ermöglicht der Industrie Client erstmals unveränderbare Produkt- und Servicedaten vom Auslieferungsdatum bis zur Verschrottung lückenlos zu speichern und zu verarbeiten. Die Einhaltung der Regeln zur Produkthaftung sind erstmals unverfälschbar möglich.

Der WORM, der hier als ein Halbleiter-Speicher realisiert wird, wird insgesamt nicht einmal, sondern doch mehrmals elektronisch beschrieben - nach jeder Veränderung. Einmal beschreiben bezieht sich auf einen bestimmten/konkreten Adressbereich.

Bei jedem Serviceeinsatz oder bei jeder Reparatur wird das System mit den neuen Funktionsdaten betankt und jeweils neue Sicherheitszertifikate erstellt und wie oben beschrieben verarbeitet und gespeichert.

Für die Änderung des WORMs ist Authentifizierung erforderlich. Zur Authentifizierung wird das beschriebene Keygen Verfahren genutzt mit dem die Systemnutzung eindeutig abgebildet wird. Durch den Austausch der Schlüssel werden die Daten jeweils zwischen der Steuerung, den WORM-Speicher und dem Backend in der Cloud transportiert, gespeichert und der Vorgang abgewickelt.

WORM ist die Abkürzung für "write once read many" oder "write once read multiple" (engl. für "schreibe einmal, lese vielfach"). WORM bezeichnet Vorkehrungen in der Informationstechnik, die das Löschen, Überschreiben und Ändern von Daten auf einem Speichermedium dauerhaft ausschließen. Die dabei eingesetzten Datenspeicher können nur gelesen und fortgesetzt bis zu ihrer Kapazitätsgrenze beschrieben werden.

Prime-Secure-Chain Clients sind mit geringem Footprint (Speicherplatz) auf kleinsten Hardwaresystemen wie z. B. dem Raspberry Zero System lauffähig. Darüber hinaus können Prime-Secure-Chain IIoT, "industrial Internet of Things", Clients auf den unterschiedlichsten Steuerungssystemen installiert werden und so das Internet der Dinge mit den Standard Peer to Per Netzwerken des Prime Secure Chain Backends verknüpft werden.

Die Software Komponente Digital Produkt Secure (DPS) des industrial und/oder IoT Clients hat folgende Funktionalität: Digitale Produkte wie Roboter, PKW, Tomographen erhalten bei der Auslieferung eine Erstbetankung der Elektronischen Funktionalität, Assistenzsysteme und Betriebsvorschriften durch einen entsprechenden Produktionscomputer.

Bei der Endkontrolle werden die elektronischen Funktionen überprüft und in der Steuerung des Gerätes abgespeichert. Ausgewiesene Sicherheitsverfahren gibt es zurzeit in der Regel nicht, d.h. jeder technisch versierte Mensch kann mit einem im Internet verfügbaren Programmiergerät das System direkt oder über On Air Schnittstellen manipulieren und Schaden anrichten.

Das DPS der vorliegenden Erfindung sichert Systeme und Geräte ab, indem die Daten der Erstbetankung kopiert und in ein unver-änderbares Prüfzertifikat überführt werden. Das Prüfzertifikat wird in der Steuerung auf einen unveränderbaren Speicher WORM geflasht.

Beide Speicher werden mit der Software der vorliegenden Erfindung überwacht. D.h. wenn zukünftig ein intelligentes Gerät gestartet wird, wird sofort durch vergleichen der beiden Speichereinträge ermittelt ob eine nicht autorisierte Veränderung vorliegt oder ob das Gerät fehlerfrei einsatzfähig ist.

Im Falle einer Abweichung der Original Speichereinträge und Funktionen zum Prüfzertifikat ist das Gerät nicht einsatzfähig und bleibt stehen.

Entsprechende Fehlermeldungen werden angezeigt und geben dem Benutzer/Servicetechniker Handlungsempfehlungen für die Instandsetzung.

Bei kaskadierenden Steuerungen in einem Bussystem werden die identifizierenden Merkmale und wiederholenden Informationen durch Vererbung digital an nachfolgende Steuerungen übertragen. Dadurch werden ganze Steuerungsbäume überwacht und abgesichert.

Bei untergeordneten Steuerungen wird priorisiert, was überwacht wird und was nicht. Untergeordnete Steuerungsbäume im CAN-Bus verwenden dabei eine Abbildung aller Checksummen, d.h. aus allen verfügbaren Checksummen wird eine Checksummen-Tabelle gebildet und die Checksummen-Tabelle wird vererbt.

Die Geodaten der Navigationssysteme sind in DPS integrierbar, so kann DPS Ereignisse zu dem jeweiligen Standort zeitlich und örtlich in Verbindung setzen.

Ein wichtige Anwendung des Industrie Clients, DPS, ist die geänderte Hardware in Form einer erstmals als standardisierte und nach IT Architekturen ausgelegte intelligente Steuerung.

Die Steuerung ist nicht verschachtelt aufgebaut wie bisherigen Elektronikbausteine auf der Platine mit unterschiedlichen Zugängen, auch Ports genannt, sondern die angepasste und adaptierte Steuerung basiert konsequent auf der Architektur von standardisierte IT Hardware Systemen.

Der Aufbau ist streng nach Input, Operating und Output gestaltet. Dieser Aufbau hat den Vorteil, dass auch Hacker nur noch einen Zugang zum System vorfinden und der ist hochabgesichert.

Der Kern der angepassten Steuerung der vorliegenden Erfindung ist ein Microcomputer, der eine angepasste Funktionalität des DPS beinhaltet und genauso einfach wie die Universellen Clients auf der IKT Seite verwendet und betrieben werden kann.

Damit schaffen wir eine standardisierte, aber innovative neue Hardwarekomponente, die leicht als Industrieclient mit angepassten und adaptierten hochsicheren Cloud Lösung der vorliegenden Erfindung im Backend integriert werden kann.

Der Baustein DPLS - Digital Product Lifecycle Secure - erweitert den DPS um die sichere, bidirektionale Kommunikation mit dem Secure Cloud Storage System.

Damit wird ermöglicht, dass die Daten auf den Systemen inkl. aller Sensorinformationen und Fehlercodes automatisch auf dem Secure Cloud Speicher abgelegt werden. Damit wird erstmals möglich, dass alle relevanten Produktdaten und deren Veränderungen lückenlos und hochsicher fortgeschrieben werden können und als Big Data Analytics zur Verfügung stehen.

DPLS ermöglich die sichere Kommunikation zwischen dem DPS und den nachgelagerten Cloud-fähigen Speichersystemen, sowie die Bereitstellung von Gerätedaten, Updates, Fehlercodes, Geodaten, usw. Diese Daten werden über das erfindungsgemäße Secure Cloud Storage System an die OEM Cloud des Herstellers sicher übertragen, indem die Verschlüsselung und Fragmentierung des Secure Cloud Storage Systems genutzt wird.

In der OEM Cloud - OEM steht für Erstausrüster (englisch Original Equipment Manufacturer, OEM, übersetzt Originalausrüstungshersteller) -des Herstellers werden die Geräte-Daten ebenfalls fragmentiert und dezentral gespeichert.

Die OEM Cloud des Herstellers beruht auf der Prime Secure Chain Backendlösung der vorliegenden Erfindung.

Im Folgenden werden die Komponenten des Backends und deren Funktionen beschrieben:

Das IPSN besteht beispielsweise aus vorhandenen Data Centern und Hosting Unternehmen, die kostengünstigen Objektspeicher, auf Englisch auch "Object-Storage", als freie Kapazitäten zur Verfügung stellen.

Objektspeicher (auch als objektbasierter Speicher bekannt) ist eine Computerdatenspeicherarchitektur, die Daten als Objekte verwaltet, im Gegensatz zu anderen Speicherarchitekturen wie Dateisystemen, die Daten als Dateihierarchie verwalten und Speicher blockieren, der Daten als Blöcke innerhalb von Sektoren und Spuren verwaltet.

Die vorhandenen Data Center werden durch die Installation der Prime Secure Chain Nodeserver zu einem virtuellen Vault Cloud Netzwerk - Vault steht dabei für engl. "Datentresor" - zusammengebunden, auf dem der peer-to-peer Ring logisch abgebildet wird. Dadurch können Daten geografisch und dezentral gespeichert werden.

Prime-Secure-Chain bringt in einfache und kostengünstige Basisinfrastruktur die Intelligenz für gestaltbare Service Level Agreements ein mit der man themenorientierte und geografisch fixierte "Vaults" als Datentresore aufbauen und betreiben kann. Ein German Vault, ein French Vault oder ein Automotive Vault oder ein Healthcare Vault werden möglich.

Das Schlüsselpaar umfasst dabei zwei Schlüssel:

Ein geheimer Schlüssel wird fragmentiert, d.h. per Hash-Verfahren im Ring-Netz gespeichert.

Ein öffentlicher Schlüssel wird im Endgerät gespeichert, d.h. der öffentliche Schlüssel wird etwa auf einem USSB- Datenspeicher physikalisch gespeichert, dies ermöglicht eine sichere Schlüsselverwaltung.

Das erfindungsgemäße Secure Cloud Storage System ist eine offene, plattformunabhängige und dezentrale, Cloud-basierte Speichertechnologie, die non-SQL Data Bases, Files und Dateien "end-to-end" dreifach verschlüsselt und sicher über das Internet und Intranet blockweise überträgt, um die Privatsphäre der Nutzer zu schützen und die Identität der Geräte gewährleistet.

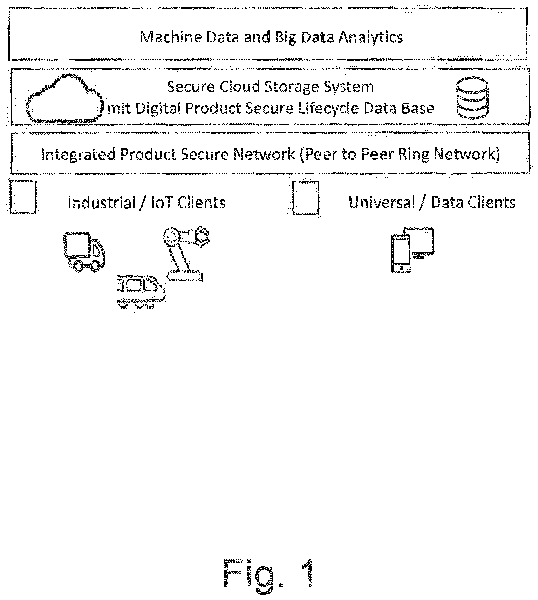

Auf der Basis dieses Storage Systems können Unternehmen für die Anwender und die intelligenten Geräte gleichermaßen einen sicheren Cloud-Speicher implementieren. Dieser Cloud Speicher kann ohne zentrale Instanz verwaltet werden und damit ist das engagierte Ziel "No single point of attack" erreicht. Das Storage System arbeitet wie in Figur 1 dargestellt und wird im folgenden Absatz beschrieben.

Daten und Dateien, die der Benutzer sicher übertragen und speichern möchte, werden von der Storage Client Software sofort auf dem universellen oder industriellen / IoT Client in Datenblöcke (Slicing) zerlegt. Gleichzeitig wird ein Schlüsselpaar für die End-to-End-Verschlüsselung erzeugt.

Die Datenblöcke werden dann einzeln mit drei verschiedenen Verschlüsselungsmethoden verschlüsselt (256 Bit Diffie Hellmann elliptische Kurve, 256 Bit David Bernstein NaCl Bibliothek, Synchroner Salsa 20).

Dabei werden die Datenblöcke auf dem Backend einem Peer to Peer Ringnetzwerk gespeichert und noch einmal fragmentiert. Im nächsten Schritt werden die verschlüsselten Fragmente zufällig von einem dynamischen Algorithmus an mehrere virtuelle Serverknoten in verschiedenen Rechenzentren verteilt, die sich in Europa, den USA oder irgendwo sonst auf der Welt befinden - ohne zentrale Instanz (Peer to Peer Ringnetzwerk).

Dadurch ist es auch den Administratoren in den jeweiligen Rechenzentren nicht möglich gespeicherte Daten auszulesen oder zu manipulieren.

Diese Rechenzentren können öffentliche Cloud-Anbieter sein (z. B. Amazon Web Services, Google Cloud Platform, Microsoft Azure, IBM Softlayer, Host Europe, Strato, 1&1, ...), aber auch private Clouds in einem Firmennetzwerk oder Hybrid-Clouds, die bestimmte Elemente von öffentlichen Cloud-Providern in die eigene Private Cloud integrieren.

Automatisch generierte Metadaten in den Clients stellen sicher, dass die Fragmente später gefunden und auf das Originaldokument wiederhergestellt werden können.

Durch die Verteilung der Fragmente an mehrere Server und Rechenzentren hat kein Administrator oder Hacker Zugriff auf alle Daten, und selbst wenn einer der drei Verschlüsselungsalgorithmen kompromittiert wurde, hat der Administrator / Hacker keine Möglichkeit, die Datei zu lesen. Gleichzeitig zur Fragmentierung wird ein Overhead von 30% der Daten durch statistische Spiegelung erzeugt.

Der Zweck dieses Overheads ist es, eine hohe Verfügbarkeit der Fragmente und ein laufendes Disaster Recovery zu gewährleisten. Die Verwendung einer RESTful API ermöglicht die Verarbeitung von sowohl strukturierten als auch unstrukturierten Daten und insbesondere die Übertragung und Speicherung ganzer Dateisysteme.

Bei der Kommunikation und/oder Datenübertragung kann ein anderer autorisierter Benutzer durch den Austausch der privaten Schlüssel die Fragmente von den Servern herunterladen oder empfangen. Mit dieser Funktion wird es erstmals möglich, große Datenmengen im Terabyte Bereich sicher und schnell über weite Strecken zu übertragen Mit der entsprechenden Funktion kann der Benutzer das Dokument verschlüsseln.

Dieser Transport-Vorgang funktioniert genauso wie die Datenspeicherung eines einzelnen Benutzers anstelle der Kommunikation und/oder Datenübertragung.

Hochverfügbarkeit in verteilten Data Centern. Heute ist es nicht möglich verteilte Dateien über unterschiedliche Data Center konsistent zu speichern und zu halten. Denn unterschiedliche Latenzzeiten im Netz führen zu unterschiedlichen Speicherzeitpunkten und somit zu inkonsistenten Daten.

Die Primäre Sicherungskettenanordnung, auch als Prime Secure Chain bezeichnet, verfügt über ein Echtzeitverfahren welches die Betriebssystem-Uhren der üblichen Server ersetzt und netzweit exakt gleiche Speicherzeiten ermöglicht. Diese Technologie beruht auf dem Paxos/Etna Verfahren, welches erstmals in Verbindung mit Enterprise Computing und hochverfügbaren dezentralen Clouds und für die Verarbeitung großer Datenmengen in Prime Secure Chain eingesetzt und integriert wurde.

Das Internet der Dinge, autonomes Fahren oder autonome Geschäftsbeziehungen zwischen Geräten bei hohem Sicherheitsanspruch und mit hohen Datenmengen ist nur und ausschließlich mit der vorliegenden Erfindung des Prime Secure Chain möglich.

Das Secure Cloud Storage System-Konzept basiert auf einem Geheimteilprinzip / Erasure Coding (Chord Technologie).

Die Idee ist es, geheime Informationen zu fragmentieren und jedem einzelnen Fragment einen eigenen, einzigartigen Teil des Geheimnisses zu geben. Die Daten und Informationen können nur rekonstruiert und gelesen werden, wenn alle Teile vereint sind. Im Storage System kennt nur der Benutzer den verwendeten Algorithmus und kann die Fragmente zusammenstellen, um das Originaldokument wiederherzustellen.

Werden Dritte Nutzer im Unternehmen berechtigt Daten auf dem Cloud Storage System zu nutzen erfolgt diese durch ein kaskadiertes Schlüsselverwaltungssystem.

D.h. im Trust Center des Unternehmens werden Berechtigungen über "Generalschlüssel" vergeben, die für die zugeordneten Einzelschlüssel pro Benutzer die Datenzugänge ermöglichen.

Einfach bildlich dargestellt handelt es sich wie beim Hausmeister und dessen Schlüsselkasten um den Generalschlüssel, der den Zugang zu allen Schlüsseln der Berechtigten Personen im Kasten ermöglicht.

Bei konventionellen Systemen stellt die Firewall oft nur den Schutz für die sensiblen Daten von außen dar. Cyber-Kriminelle dringen immer mehr durch und haben vollen Zugriff auf alle Daten und manchmal sogar auf zusätzliche Computer und/oder Server im Netzwerk, sobald sie die Firewall gehackt haben.

Mit dem Storage System können Hacker und Administratoren jedoch die fragmentierten und verschlüsselten Daten nicht nutzen, auch wenn sie die Firewall überwinden und in das System gelangen:

Für den möglichen Angriff gezielt auf Daten stehlen und/oder stilles mitlesen von Daten:

Nach dem Überwinden der Firewall können Hacker nur verschlüsselte und nicht zusammenhängende Dateifragmente sehen. Auch wenn sie es schaffen sollten, die Verschlüsselung zu brechen, liefern die Datei-Fragmente immer noch keine wertvollen Informationen. Es ist ihnen unmöglich, alle relevanten Fragmente zu finden und sie zu einem kompletten Dokument zu kombinieren, da sie weder die anderen Server noch die Verteilung der Fragmente kennen, noch können sie die 3 Verschlüsselungstechnologien zeitnah entschlüsseln.

Für den möglichen Angriff gezielt auf Daten löschen oder manipulieren:

Wenn der Hacker versucht, die Datei-Fragmente auf dem Server zu löschen oder zu manipulieren (z.B. nach einem fehlgeschlagenen Versuch, die Dokumente zu lesen), bemerken die Storage System-Algorithmen (Monitoring) die Änderung und stellen automatisch die gelöschten und/oder kompromittierten Dateifragmente aus dem erzeugten Overhead wieder her.

Ein ständiges Desaster Recovery ist verfügbar und damit ist Prime Secure Chain hochverfügbar!

Für den möglichen Fehler, der Server antwortet nicht:

Wenn entweder durch einen Angriff oder einen technischen Ausfall ein ganzer Server (oder sogar Cloud Service) offline ist oder ausfällt, kann das Storage System die fehlenden Dateifragmente im Verteilungsnetzwerk neu zu ordnen und die vollständige Datenverfügbarkeit wiederherstellen.

Wenn mindestens 60-70% der Daten verfügbar sind, kann das Storage System die gesamten Dateien wiederherstellen. Mit dieser Funktionalität sind auch Datenumzüge leicht realisierbar.

Weitere vorteilhafte Ausführungsformen werden durch die abhängigen Patentansprüche definiert.

Gemäß einer möglichen Ausführungsform der vorliegenden Erfindung ist vorgesehen, dass die Prime Secure Chain für Blockchain verwendet wird.

Gemäß einer möglichen Ausführungsform der vorliegenden Erfindung ermöglicht die Prime Secure Chain erstmals die sichere und performante Verarbeitung der gerade am Markt erscheinenden open Source Technologie "Blockchain".

Die derzeit am Markt bekannt gewordenen Blockchaintechnologie ist derzeit aufgrund der Größe und Komplexität (ein Blockchain ist beispielsweise ca. 130-140 GB groß) nicht für Massendaten Verarbeitung im IoT oder Finanzwesen geeignet.

Die Blockchain von Bitcoin ist die älteste Blockchain. Sie startete im Januar 2009, hatte Anfang September 2017 eine Größe von ca. 131 GB und lag im Mai 2016 auf ca. 6700 Knoten redundant und öffentlich zugriffsbereit vor.

Diese Größe und Komplexität ist für das heutige Finanzwesen mit Massendaten und Milliarden von z. B. Kreditkartendaten nicht einsetzbar.

Gleichermaßen sind Auditierungen mit solch großen Blockchains nicht verarbeitbar, zu teuer und zu langsam. Gleiches gilt für neue sicher Applikation beim autonomen Fahren und deren Rechtsicherheit in verketteten Systemen.)

Gemäß einer möglichen Ausführungsform der vorliegenden Erfindung kann die Prime Secure Chain große Blockchains mit den intelligenten Clients aufnehmen, kleine und hochsichere Blöcke bilden und diese in verteilten Systemen und unter Verwendung der beschriebenen Hash-Technologie, der Hochverfügbarkeit und der Realtime Cloud Technologie performant und sicher verarbeiten und speichern.

Durch die Reduzierung der Chainlänge und der Fragmentierung entstehen weitaus kleinere Datenblöcke, die deutlich schneller verarbeitet werden können, ohne jedoch den Vorteil verketteter und mit Hashtechnologie verbundener Blockchains zu verlieren.

Durch das verteilte Accessschlüsselpaar können Daten neben der Speicherung auch weiterverarbeitet und von autorisierten Usern genutzt werden, etwa Big Data und Blockchain-Lösungen.

Gemäß einer möglichen Ausführungsform der vorliegenden Erfindung ist vorgesehen, dass die Prime Secure Chain in Edge Computing Umgebung eingesetzt wird.

Edge Computing bezeichnet im Gegensatz zum "Cloud Computing" die dezentrale Datenverarbeitung am Rand des Netzwerks, der sogenannten Edge (engl. für Rand oder Kante).

D.h. beim Edge Computing werden Computer-Anwendungen, Daten und Dienste von zentralen Knoten (Rechenzentren) weg zu den äußeren Rändern eines Netzwerks verlagert. Dieser Ansatz erfordert den Einsatz von Ressourcen, die nicht permanent mit einem Netzwerk verbunden sind wie Controller, Notebooks, Smartphones, Tabletcomputer und Sensoren.

Edge Computing beinhaltet zahlreiche Technologien wie Sensornetze, mobile Datenerfassung, mobile Signaturanalyse, Peer-to-Peer-sowie Ad-hoc-Vernetzung.

Dabei kann Edge Computing als Architekturkonzept für das Internet der Dinge, IoT, verwendet werden, das eine Verknüpfung eindeutig identifizierbarer physischer Objekte - auch Englisch "things" - mit einer virtuellen Repräsentation in einer Internet-ähnlichen Struktur herstellt. Edge Computing kann auch als Fog Computing oder als Local Cloud bzw. Cloudlet bezeichnet werden.

Die Intelligenz von Datenerfassungsgeräten und Sensoren ist erheblich gewachsen und dezentraler geworden. Die Verarbeitungselemente rückten dabei näher an den Sensor.

Aber nicht nur die Messgeräte wurden intelligenter. Auch intelligente Sensoren kamen auf, die das Sensorelement, die Signalkonditionierung, die Embedded-Verarbeitung und die digitale Schnittstelle in einem extrem kleinen Formfaktor bzw. System vereinen, beispielsweise Raspberry Zero Systeme.

Die Dienste der Edge App verringern signifikant das zu übertragende Datenvolumen und damit den Datenaustausch und die Übertragungsstrecke, wodurch sich die Übertragungskosten und die Wartezeiten verringern und sich die Servicequalität insgesamt verbessert.

Beim Edge Computing verlieren zentrale Rechenzentren an Bedeutung, wodurch ein größerer Flaschenhals für den Datentransfer und eine potentielle Fehlerquelle vermieden werden. Die Sicherheit verbessert sich ebenfalls, da verschlüsselte Dateien näher am Netzwerkkern verarbeitet werden. Wenn die Daten das Unternehmen erreichen, können Viren, verfälschte Daten und Hackerangriffe frühzeitig abgefangen werden.

Letztendlich erweitert die Fähigkeit zur Virtualisierung die Skalierbarkeit, was bedeutet, dass sich die Anzahl der Edge-Geräte im Netzwerk problemlos steigern lässt. Beim Edge Computing werden Echtzeit-Anforderungen im Internet der Dinge besser unterstützt als dies in der Cloud der Fall ist.

Nachteile beim Edge Computing hingegen ergeben sich, wenn eine sehr hohe Datenmenge zu verarbeiten oder zu speichern bzw. der Rechen- oder Speicherbedarf sehr unregelmäßig ist.

Edge Computing spielt bei Vernetzung der Produktionsmittel in der Industrie 4.0 mit Informations- und Kommunikationstechnik eine große Rolle. In diesem Zusammenhang ist auch die Erweiterung der herkömmlichen Speicherprogrammierbaren Steuerung, SPS, oder MCU in der Car IT zum Edge Controller zu sehen.

Eine ähnliche Definition wird derzeit mit der Industrie 4.0 Referenzarchitektur in Deutschland mit den Fraunhofer Instituten erarbeitet. Diese Referenzarchitektur wird RAMI 4.0 genannt.)

Prime Secure Chain beinhaltet schon heute was die Experten für die Zukunft in ihren Konzepten fordern. Die dezentrale Daten Speicherung und die Datenvorverarbeitung wird mit den PSC Clients und dem PSC Backend Cloud Storage System bereits erfüllt!

Die kommerziellen Clients in unterschiedlichen Ausprägungen wie Apps, Data Center Storage und industriellen Clients sind dabei die EDGESs mit der Vorverarbeitung und Klassifizierung von den Massendaten und der Einbindung modernen Apps als neue Anwendungen gleichermaßen.

Die vorliegende Erfindung ermöglicht insbesondere die signifikante Steigerung der Zuverlässigkeit und Verfügbarkeit.

Die vorliegende Erfindung ermöglicht insbesondere die signifikante Steigerung der aktiven Informationssicherheit.

Die vorliegende Erfindung ermöglicht insbesondere die signifikante Steigerung und Verbesserung der Datenintegrität, Stichwort "Ownership of Data", Angelegenheiten bezüglich des Eigentums der Daten und des Zugriffs zu den Daten in der Datenbank.

Die vorliegende Erfindung ermöglicht insbesondere die signifikante Reduzierung von Kosten (Cent/GB).

Die vorliegende Erfindung ermöglicht insbesondere die signifikante Steigerung von Speed und Performance.

Die vorliegende Erfindung ermöglicht insbesondere die signifikante Vereinfachung von Operations- und Administration.

Die vorliegende Erfindung ermöglicht insbesondere die signifikante Steigerung der Skalierbarkeit.

Die vorliegende Erfindung ermöglicht insbesondere die vollständiges Disaster-Recovery, die Wiederherstellung nach einem schwerwiegenden Datenverlust, beispielsweise auch eine Notfallwiederherstellungsplanung und Disaster-Recovery-Leistungen.

Die vorliegende Erfindung ermöglicht insbesondere eine hohe digitale Souveränität, eine wirtschaftlich nicht hackbare Sicherheit, eine vollständige Unabhängigkeit von Cloud Service Providern, eine signifikante Steigerung der Produktsicherheit.

Die vorliegende Erfindung ermöglicht insbesondere die signifikante Steigerung der Systemsicherheit und die wirtschaftliche und sichere Bewältigung der enorm steigenden Datenflut.

Die vorliegende Erfindung ermöglicht insbesondere die Bereitstellung von hochskalierenden, hochverfügbaren und sicheren CloudServices und ein Einleiten eines Paradigmenwechsels von der klassischen, Angreifer abwehrenden IKT Sicherheitstechnik hin zur inneren und fehlertoleranten Informationssicherheit

Die vorliegende Erfindung umfasst den erstmaligen Einsatz von standardisierten IKT Cloud-Technologien in der Produktsicherheit und in der Systemsicherheit bei intelligenten Geräten, etwa Medizintechnik, Automotive, Industrie, Logistik, Smart Home.

Die vorliegende Erfindung umfasst die erstmalige Zulassung von Hackern und Spionen bei gleichzeitiger End-to-End Sicherheit in der Kommunikation und unveränderbaren Informationen und Apps.

Die vorliegende Erfindung umfasst die erstmalige Anwendung von standardisierten IKT Technologien, für Hardware und Software in der Elektronik von intelligenten Produkten und Systemen

Die vorliegende Erfindung umfasst die erstmalige Sicherstellung von manipulationssichern und funktionssicheren Produkten über den gesamten Lifecycle hinweg durch unveränderbare Prüfzertifikate im Produkt und durch die Integration in Big Data Cloud Services.

Die vorliegende Erfindung umfasst die erstmalige Erfüllung der steigenden Anforderungen in der Produkthaftung und der lückenlosen Nachweisführung aller Events entlang des Produktlebensyzyklus.

Die vorliegende Erfindung umfasst die erstmalige sichere Integration von vertikalen und horizontalen Systemen.

Die vorliegende Erfindung ermöglicht einen Plagiateschutz durch eindeutige Identifikation und Authentifikation von intelligenten Produkten

Die vorliegende Erfindung ermöglicht Transparenz und Revisionssicherheit im Sinne der Corporate Compliance in den Unternehmen, den Prüfungsgesellschaften - DEKRA, TÜV, GTÜ, oder sonstige Prüfungsgesellschaften - und staatlichen Aufsichtsorganen.

### Kurze Beschreibung der Figuren

Die beiliegenden Zeichnungen sollen ein weiteres Verständnis der Ausführungsformen der Erfindung vermitteln. Die beiliegenden Zeichnungen veranschaulichen Ausführungsformen und dienen im Zusammenhang mit der Beschreibung der Erklärung von Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1:: eine schematische Darstellung einer Struktur einer primären Sicherungskettenanordnung gemäß einer Ausführungsform der vorliegenden Erfindung;
- Fig. 2:: eine schematische Darstellung eines Aufbaus der intelligenten Steuerung einer primären Sicherungskettenanordnung gemäß einer Ausführungsform der vorliegenden Erfindung;
- Fig. 3:: eine schematische Darstellung einer Big Data und Blockchain Anwendung einer primären Sicherungskettenanordnung gemäß einer Ausführungsform der vorliegenden Erfindung;
- Fig. 4:: eine schematische Darstellung einer Edge Computing Anwendung einer primären Sicherungskettenanordnung gemäß einer Ausführungsform der vorliegenden Erfindung;
- Fig. 5:: eine schematische Darstellung einer Clientvorrichtung für eine primäre Sicherungskettenanordnung gemäß einer Ausführungsform der vorliegenden Erfindung;
- Fig. 6:: eine schematische Darstellung einer Serveranordnung für eine primäre Sicherungskettenanordnung gemäß einer Ausführungsform der vorliegenden Erfindung;
- Fig. 7:: eine schematische Darstellung eines Flussdiagramms eines Clientverfahrens für eine Clientvorrichtung für eine primäre Sicherungskettenanordnung gemäß einer Ausführungsform der vorliegenden Erfindung;
- Fig. 8:: eine schematische Darstellung eines Flussdiagramms eines Serververfahrens für eine Serveranordung für eine primäre Sicherungskettenanordnung gemäß einer Ausführungsform der vorliegenden Erfindung;
- Fig. 9:: eine schematische Darstellung einer Prozessvisualisierung für eine primäre Sicherungskettenanordnung gemäß einer Ausführungsform der vorliegenden Erfindung;
- Fig. 10:: eine schematische Darstellung einer Prozessvisualisierung für die Anwendung von standardisierten IKT Technologien und Cloud Computing Services im industriellen Umfeld der Produkt- und Systemsicherheit gemäß einer Ausführungsform der vorliegenden Erfindung; und
- Fig. 11:: eine schematische Darstellung einer Prozessvisualisierung für die Verknüpfung von Verschlüsselungsverfahren, Datenfragmentierung mit der gleichzeitigen Erzeugung einer statistischen Datenspiegelung für die Hochverfügbarkeit gemäß einer Ausführungsform der vorliegenden Erfindung.

### Detaillierte Beschreibung von Ausführungsbeispielen

In den Figuren der Zeichnungen bezeichnen gleiche Bezugszeichen gleiche oder funktionsgleiche Elemente, Bauteile, Komponenten oder Verfahrensschritte, soweit nichts Gegenteiliges angegeben ist.

Die Fig. 1 zeigt eine schematische Darstellung einer Struktur einer primären Sicherungskettenanordnung gemäß einer Ausführungsform der vorliegenden Erfindung.

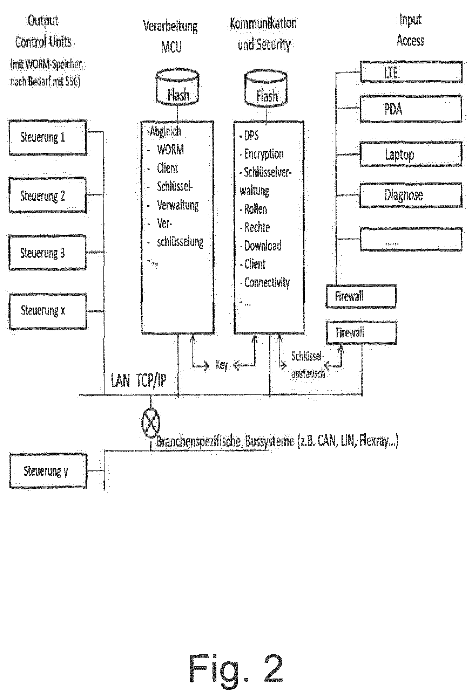

Die Fig. 2 zeigt eine schematische Darstellung eines Aufbaus der intelligenten Steuerung einer primären Sicherungskettenanordnung gemäß einer Ausführungsform der vorliegenden Erfindung.

Ein wichtiger Bestandteil des Industrie Clients, DPS, der angepassten Hardware ist die standardisierte und nach IT-Architekturen ausgelegte intelligente Steuerung.

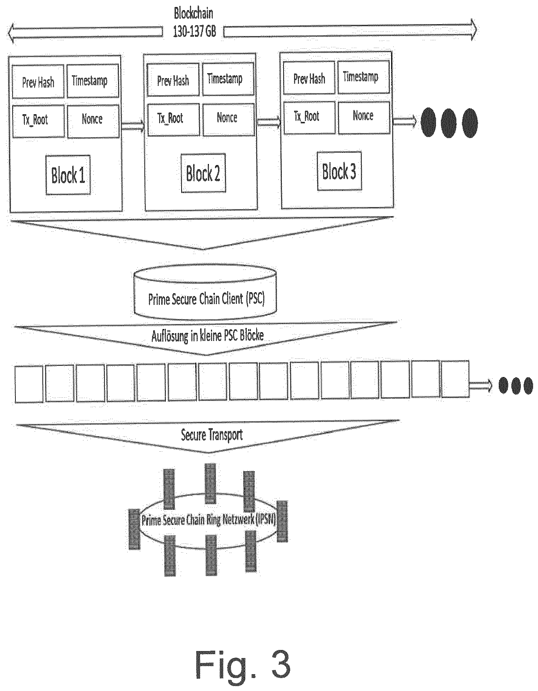

Die Fig. 3 zeigt eine schematische Darstellung einer Big Data und Blockchain Anwendung einer primären Sicherungskettenanordnung gemäß einer Ausführungsform der vorliegenden Erfindung.

Die Fig. 3 zeigt beispielsweise wie durch das verteilte Accessschlüsselpaar Daten neben der Speicherung auch weiterverarbeitet und von autorisierten Usern genutzt werden können, etwa für dezentralisierte und vernetzte Big Data und Blockchain Anwendungen.

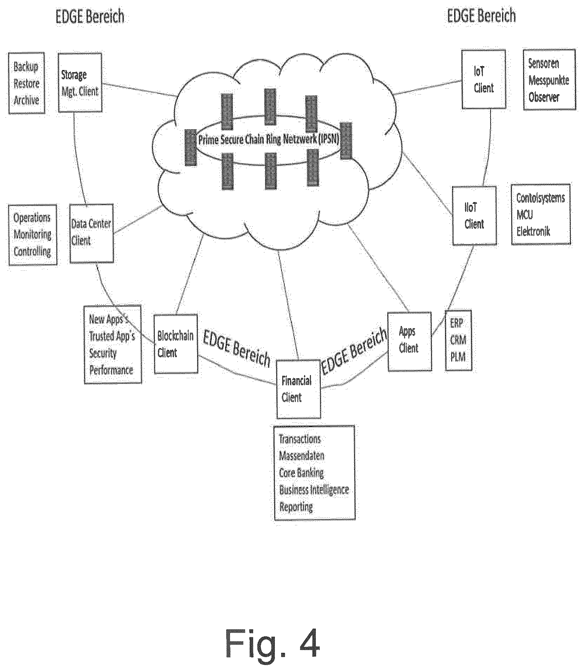

Die Fig. 4 zeigt eine schematische Darstellung einer Edge Computing Anwendung einer primären Sicherungskettenanordnung gemäß einer Ausführungsform der vorliegenden Erfindung.

Die Fig. 4 zeigt die Prime Secure Chain in Edge Computing Umgebung.

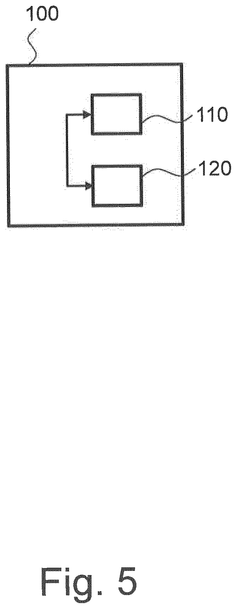

Die Fig. 5 zeigt eine schematische Darstellung einer Clientvorrichtung für eine primäre Sicherungskettenanordnung gemäß einer Ausführungsform der vorliegenden Erfindung.

Die Clientvorrichtung 100 umfasst eine Verschlüsselungseinrichtung 110 und eine Sendereinrichtung 120.

Die Verschlüsselungseinrichtung 110 ist dazu ausgebildet, Eingangsdaten in eine Mehrzahl an Datenblöcken aufzuteilen und jeden einzelnen Datenblock der Mehrzahl der Datenblöcke mit Hilfe von:
i) einem öffentlichen Schlüssel einer Serveranordnung 1000;
ii) einem geheimen Schlüssel der Clientvorrichtung; und
iii) einem Einmal-Schlüssel bzw. einer zufallsgenerierten Zählnummer
zu verschlüsseln und darauf basierend einen Ciphertext zu generieren

Die Sendereinrichtung 120 ist mit der Verschlüsselungseinrichtung 110 gekoppelt und dazu ausgebildet, für den Ciphertext eine Speicherzeitsynchronisierung zu generieren und den Ciphertext mit der generierten Speicherzeitsynchronisierung an die Serveranordnung 1000 über eine Internetverbindung zu versenden.

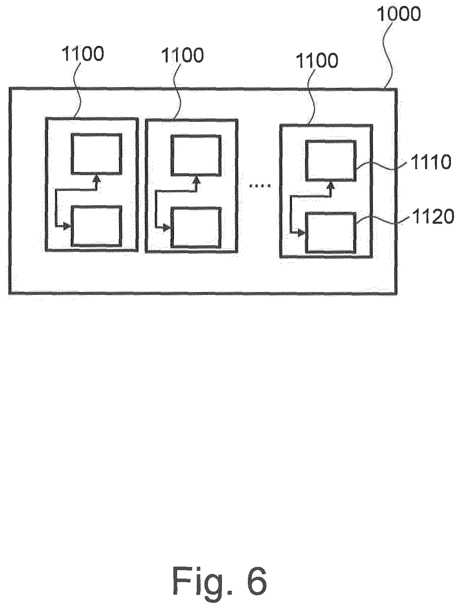

Die Fig. 6 zeigt eine schematische Darstellung einer Serveranordnung für eine primäre Sicherungskettenanordnung gemäß einer Ausführungsform der vorliegenden Erfindung.

Die Fig. 6 zeigt eine Serveranordung 1000 für eine primäre Sicherungskettenanordnung, wobei die Serveranordung 1000 eine Mehrzahl von Servervorrichtungen 1100 umfasst.

Eine Servervorrichtung 1100 weist dabei eine Empfängereinrichtung 1110 und eine Speichereinrichtung 1120 auf.

Die Empfängereinrichtung 1110 ist dazu ausgebildet, einen Ciphertext mit einer Speicherzeitsynchronisierung von einer Clientvorrichtung 100 über eine Internetverbindung zu empfangen.

Die Speichereinrichtung 1120 ist mit der Empfängereinrichtung 1110 gekoppelt dazu ausgebildet, den Ciphertext entsprechend der Speicherzeitsynchronisierung zu speichern.

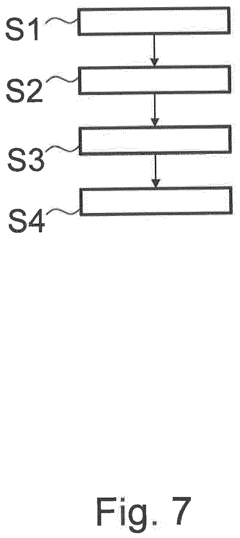

Die Fig. 7 zeigt eine schematische Darstellung eines Flussdiagramms eines Clientverfahrens für eine Clientvorrichtung für eine primäre Sicherungskettenanordnung gemäß einer Ausführungsform der vorliegenden Erfindung.

Das in der Fig. 7 dargestellte Clientverfahren für eine Clientvorrichtung 100 für eine primäre Sicherungskettenanordnung umfasst folgende Verfahrensschritte:

Als ein erster Verfahrensschritt erfolgt ein Aufteilen S1 von Eingangsdaten in eine Mehrzahl an Datenblöcken mittels einer Verschlüsselungseinrichtung 110.

Als ein zweiter Verfahrensschritt erfolgt ein Verschlüsseln S2 von jedem einzelnen Datenblock der Mehrzahl der Datenblöcke mit Hilfe von: einem öffentlichen Schlüssel einer Serveranordnung 1000; einem geheimen Schlüssel der Clientvorrichtung 100; und einem Einmal-Schlüssel bzw. einer zufallsgenerierte Zählnummer und, darauf basierend, erfolgt ein Generieren von einen Ciphertext.

Als ein dritter Verfahrensschritt erfolgt ein Generieren S3 einer Speicherzeitsynchronisierung für den Ciphertext mittels einer Sendereinrichtung 120 und ein Versenden S4 des Ciphertextes mit der Speicherzeitsynchronisierung über eine Internetverbindung an die Serveranordnung 1000.

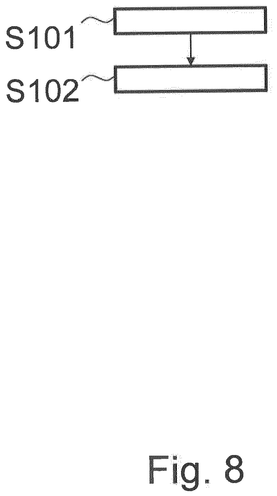

Die Fig. 8 zeigt eine schematische Darstellung eines Flussdiagramms eines Serververfahrens für eine Serveranordung für eine primäre Sicherungskettenanordnung gemäß einer Ausführungsform der vorliegenden Erfindung.

Das in der Fig. 8 dargestellte Clientverfahren Serververfahren für eine Serveranordung 1000 für eine primäre Sicherungskettenanordnung umfasst folgende Verfahrensschritte:

Als ein erster Verfahrensschritt erfolgt ein Empfangen S101 von einem Ciphertext mit einer Speicherzeitsynchronisierung von einer Clientvorrichtung 100 über eine Internetverbindung mittels einer Empfängereinrichtung 1110.

Als ein zweiter Verfahrensschritt erfolgt ein Speichern S102 des Ciphertextes entsprechend der Speicherzeitsynchronisierung mittels einer Speichereinrichtung 1120.

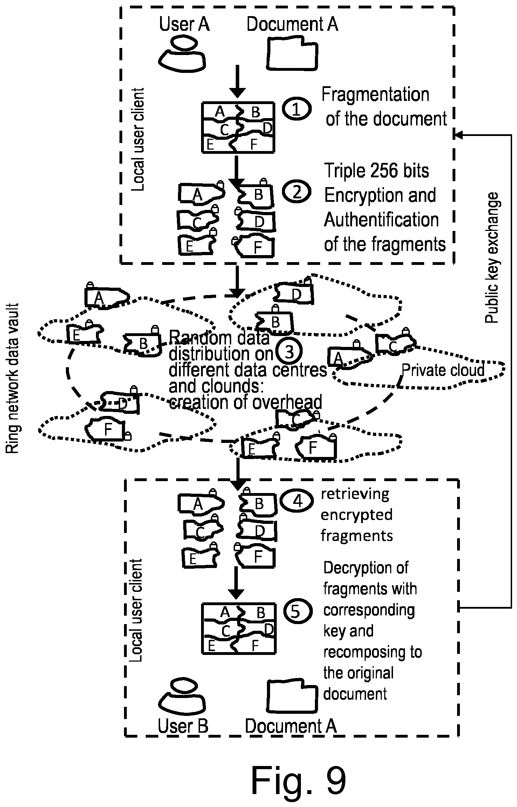

Die Fig. 9 zeigt eine schematische Darstellung einer Prozessvisualisierung für eine primäre Sicherungskettenanordnung gemäß einer Ausführungsform der vorliegenden Erfindung.

Die Prozessvisualisierung für eine primäre Sicherungskettenanordnung ist eine offene, plattformunabhängige und dezentrale Cloud-basierte Speichertechnologie, die nonSQL Data Bases, Files und Dateien "end-to-end" dreifach verschlüsselt und sicher über das Internet und Intranet blockweise überträgt, um die Privatsphäre der Nutzer zu schützen und die Identität der Geräte gewährleistet.

Diese Technologie wird nachfolgende als LUCKYSTOR-Technologie bezeichnet und umfasst die Client- und Serververfahren für eine primäre Sicherungskettenanordnung wie bereits in den Fig. 5 bis 8 beschrieben.

Auf der Basis der LUCKYSTOR-Technologie können Unternehmen für die Anwender und die intelligenten Geräte gleichermaßen einen sicheren Cloud-Speicher implementieren.

Dieser Cloud Speicher kann ohne zentrale Instanz verwaltet werden und damit ist das engagierte Ziel "No single point of attack" erreicht. Die LUCKYSTOR-Technologie arbeitet wie in Fig. 9 dargestellt und wird im folgenden Absatz beschrieben.

Daten und Dateien die der Benutzer sicher übertragen und speichern möchte, werden von der LUCKYSTOR Client Software sofort auf dem Personal Computer (Client) in Datenblöcke (Slicing) zerlegt. Gleichzeitig wird ein Schlüsselpaar für die End-to-End-Verschlüsselung erzeugt.

Die Datenblöcke werden dann einzeln mit drei verschiedenen Verschlüsselungsmethoden verschlüsselt (256 Bit Diffie Hellmann elliptische Kurve, 256 Bit David Bernstein NaCl Bibliothek, Synchroner Salsa 20). Dabei werden die Datenblöcke auf dem Backend einem Peer-to-Peer Ringnetzwerk gespeichert und noch einmal fragmentiert.

Im nächsten Schritt werden die verschlüsselten Fragmente zufällig von einem dynamischen Algorithmus an mehrere virtuelle Serverknoten in verschiedenen Rechenzentren verteilt, die sich in Europa, den USA oder irgendwo sonst auf der Welt befinden - ohne zentrale Instanz (Peer to Peer Ringnetzwerk).

Diese Rechenzentren können öffentliche Cloud-Anbieter sein, aber auch private Clouds in einem Firmennetzwerk oder Hybrid-Clouds, die bestimmte Elemente von öffentlichen Cloud-Providern in die eigene Private Cloud integrieren. Automatisch generierte Metadaten und Etiketten stellen sicher, dass die Fragmente später gefunden und auf das Originaldokument wiederhergestellt werden können.

Durch die Verteilung der Fragmente an mehrere Server und Rechenzentren hat kein Administrator oder Hacker Zugriff auf alle Daten, und selbst wenn einer der drei Verschlüsselungsalgorithmen kompromittiert wurde, hat der Administrator / Hacker keine Möglichkeit, die Datei zu lesen. Gleichzeitig zur Fragmentierung wird ein Overhead von 130% der Daten durch statistische Spiegelung erzeugt.

Der Zweck dieses Overheads ist es, eine hohe Verfügbarkeit der Fragmente und ein laufendes Desaster Recovery zu gewährleisten. Die Verwendung einer RESTful API ermöglicht die Verarbeitung von sowohl strukturierten als auch unstrukturierten Daten und insbesondere die Übertragung und Speicherung ganzer Dateisysteme. Bei der Kommunikation / Datenübertragung kann ein anderer autorisierter Benutzer durch den Austausch der privaten Schlüssel die Fragmente von den Servern herunterladen oder empfangen.

Mit dieser Funktion wird es erstmals möglich große Datenmengen im Terrabyte Bereich sicher und schnell über weite Strecken zu übertragen und mit der entsprechenden Funktion kann der Benutzer das Dokument verschlüsseln. Dieser Transport-Vorgang funktioniert genauso wie die Datenspeicherung eines einzelnen Benutzers anstelle der Kommunikation und/oder Datenübertragung.

Hochverfügbarkeit in verteilten Data Centern. Heute ist es nicht möglich verteilte Dateien über unterschiedliche Data Center konsistent zu speichern und zu halten. Denn unterschiedliche Latenzzeiten im Netz führen zu unterschiedlichen Speicherzeitpunkten und somit zu inkonsistenten Daten. Die LUCKYSTOR-Technologie verfügt über ein Echtzeitverfahren, welches die Betriebssystemuhren der üblichen Server ersetzt und netz weit exakt gleiche Speicherzeiten ermöglicht.

Diese Technologie beruht auf dem Paxos/Etna Verfahren, welches erstmals in Verbindung mit Enterprise Computing und hochverfügbaren dezentralen Clouds und für die Verarbeitung großer Datenmengen eingesetzt und integriert wurde. Das Internet der Dinge, autonomes Fahren oder autonome Geschäftsbeziehungen zwischen Geräten bei hohem Sicherheitsanspruch und mit hohen Daten mengen ist nur und ausschließlich mit der vorliegenden Erfindung der Prime Secure Chain möglich.

Das LUCKYSTOR Konzept basiert auf einem Geheimteilprinzip / Erasure Coding (Chord Technologie) von Massachusetts Institute of Technology. Die Idee ist es, geheime Informationen zu fragmentieren und jedem einzelnen Fragment einen eigenen, einzigartigen Teil des Geheimnisses zu geben.

Die Daten und Informationen können nur rekonstruiert und gelesen werden, wenn alle Teile vereint sind. Bei der LUCKYSTOR-Technologie kennt nur der Benutzer den verwendeten Algorithmus und kann die Fragmente zusammenstellen, um das Originaldokument wiederherzustellen.

Werden Dritte Nutzer im Unternehmen berechtigt Daten auf der LUCKYSTOR-Technologie zu nutzen, erfolgt diese durch ein kaskadiertes Schlüsselverwaltungssystem.

D.h. im Trust Center des Unternehmens werden Berechtigungen über "Generalschlüssel" vergeben, die für die zugeordneten Einzelschlüssel pro Benutzer die Datenzugänge ermöglichen. Einfach bildlich dargestellt handelt es sich wie beim Hausmeister und dessen Schlüsselkasten um den Generalschlüssel" der den Zugang zu allen Schlüsselnder Berechtigten Personen im Kasten ermöglicht.

Bei konventionellen Systemen stellt die Firewall oft nur den Schutz für die sensiblen Daten von außen dar. Cyber-Kriminelle dringen immer mehr durch und haben vollen Zugriff auf alle Daten und manchmal sogar auf zusätzliche Computer und/oder Server im Netzwerk, sobald sie die Firewall gehackt haben.

Mit der LUCKYSTOR- Technologie können Hacker und Administratoren jedoch die fragmentierten und verschlüsselten Daten nicht nutzen, auch wenn sie die Firewall überwinden und in das System gelangen:

### Daten stehlen und/oder lesen:

Nach dem Überwinden der Firewall können Hacker nur verschlüsselte und nicht zusammenhängende Dateifragmente sehen. Auch wenn sie es schaffen sollten, die Verschlüsselung zu brechen, liefern die Datei-Fragmente immer noch keine wertvollen Informationen. Es ist ihnen unmöglich, alle relevanten Fragmente zu finden und sie zu einem kompletten Dokument zu kombinieren, da sie weder die anderen Server noch die Verteilung der Fragmente kennen, noch können sie die 3 Verschlüsselungstechnologien zeitnah entschlüsseln.

### Daten löschen oder manipulieren:

Wenn der Hacker versucht, die Datei-Fragmente auf dem Server zu löschen oder zu manipulieren (z.B. nach einem fehlgeschlagenen Versuch, die Dokumente zu lesen), bemerken die LUCKYSTOR-Algorithmen (Monitoring) die Änderung und stellen automatisch die gelöschten und/oder kompromittierten Dateifragmente aus dem erzeugten Overhead wieder her. Ein ständiges Desaster Recovery ist verfügbar.

### Falls der Server nicht antwortet:

Wenn entweder durch einen Angriff oder einen technischen Ausfall ein ganzer Server (oder sogar Cloud Service) offline ist, kann der LUCKYSTOR-Algorithmus die fehlenden Dateifragmente im Verteilungsnetzwerk neu zu ordnen und die vollständige Datenverfügbarkeit wiederherstellen.

Wenn mindestens 60-70% der Daten verfügbar sind, kann der der LUCKYSTOR-Algorithmus die gesamten Dateien wiederherstellen. Mit dieser Funktionalität sind auch Datenumzüge leicht realisierbar.

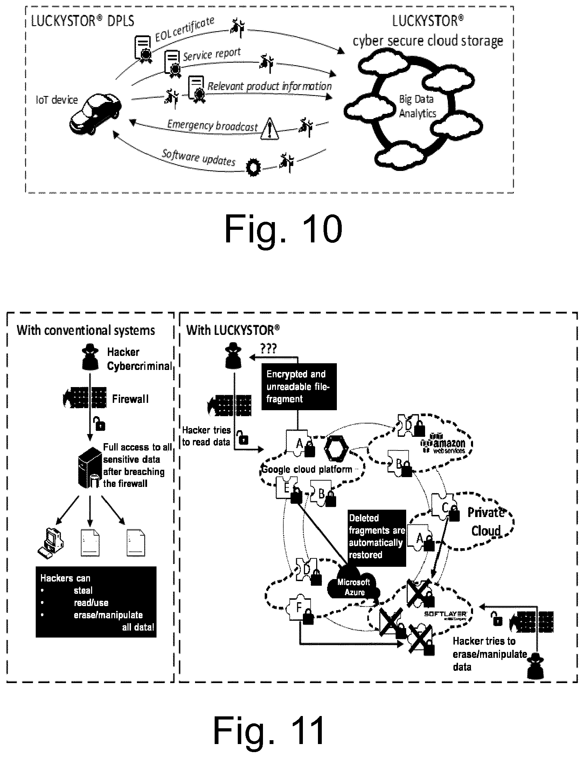

Die Fig. 10 zeigt eine schematische Darstellung einer Prozessvisualisierung für die Anwendung von standardisierten IKT Technologien und Cloud-Computing Services im industriellen Umfeld der Produkt- und Systemsicherheit gemäß einer Ausführungsform der vorliegenden Erfindung.

Prime Secure Chain ist eine integrierte Verbundtechnologie, die erstmals die Anwendung von standardisierten IKT Technologien und Cloud-Computing Services im industriellen Umfeld der Produkt-und Systemsicherheit (DPS, DPLS) ermöglicht.

Die Erfüllung von Maßnahmen zur Einhaltung von der Produkthaftung und Corporate Governance Regeln werden erstmals nachvollziehbar und komplett von der Erstauslieferung bis zur Verschrottung eines Produktes möglich.

Die enorme Datenmenge steht den Herstellern und Prüfunternehmen erstmals lückenlos für Analytics zur Verfügung.

Die vorliegende Erfindung leitet damit einen Paradigmenwechsel ein, welcher die zukünftige Nutzung digitalisierter Methoden, Verfahren und Anwendungen wieder mehr sorglos ermöglicht und deutlich vereinfacht.

Dies wird ermöglicht durch eine exzellente Verknüpfung von drei verschiedenen Verschlüsselungsverfahren, sowie einer doppelten Datenfragmentierung mit der gleichzeitigen Erzeugung einer statistischen Datenspiegelung für die Hochverfügbarkeit.

Die industriellen Clients sichern intelligente Produkte gegen Hackerangriffe, fehlerhafte Services und technische Fehler absichern.

Die Fig. 11 zeigt eine schematische Darstellung einer Prozessvisualisierung für die Verknüpfung von Verschlüsselungsverfahren, Datenfragmentierung mit der gleichzeitigen Erzeugung einer statistischen Datenspiegelung für die Hochverfügbarkeit gemäß einer Ausführungsform der vorliegenden Erfindung.

Ein wichtiger Bestandteil des Industrie Clients (DPS) ist die angepasste Hardware in Form einer erstmals als standardisierte und nach IT Architekturen ausgelegte intelligente Steuerung.

Die Steuerung ist nicht verschachtelt aufgebaut wie bisherigen Elektronikbausteine auf der Platine mit unterschiedlichen Zugängen (Ports), sondern die neue angepasste Steuerung der vorliegenden Erfindung basiert konsequent auf der Architektur von standardisierte IT Hardware Systemen.

Der Aufbau ist streng nach Input, Operating und Output gestaltet. Die hat den Vorteil, dass auch Hacker nur noch einen Zugang zum System vorfinden und der ist hochabgesichert.

Der Kern der Steuerung der vorliegenden Erfindung ist ein miniaturisierter Personal Computer, der die Funktionalität des DPS beinhaltet und genauso einfach wie die Standardclients auf der IKT Seite verwendet und betrieben werden kann.

Damit wird eine standardisierte, aber innovative neue Hardwarekomponente ermöglicht, die leicht als Industrieclient in die hochsichere Cloud Lösung im Backend der vorliegenden Erfindung integriert werden kann.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Ergänzend sei darauf hingewiesen, dass "umfassend" und "aufweisend" keine anderen Elemente oder Schritte ausschließt und "eine" oder "ein" keine Vielzahl ausschließt.

Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Clientvorrichtung (100) für eine primäre Sicherungskettenanordnung, wobei die Clientvorrichtung (100) umfasst:
- eine Verschlüsselungseinrichtung (110), welche dazu ausgebildet ist, Eingangsdaten in eine Mehrzahl an Datenblöcken aufzuteilen und jeden einzelnen Datenblock der Mehrzahl der Datenblöcke mit Hilfe von:
i) einem öffentlichen Schlüssel einer Serveranordnung (1000);
ii) einem geheimen Schlüssel der Clientvorrichtung; und
iii) einem zufallsgenerierte Zählnummer
mindestens dreifach zu verschlüsseln und darauf basierend einen Ciphertext zu generieren; und
- eine Sendereinrichtung (120), welche mit der Verschlüsselungseinrichtung (110) gekoppelt ist und welche dazu ausgebildet ist, für den Ciphertext eine Speicherzeitsynchronisierung zu generieren und den Ciphertext mit der generierten Speicherzeitsynchronisierung an die Serveranordnung (1000) über eine Internetverbindung zu versenden.

2. Clientvorrichtung (100) nach Anspruch 1, wobei die Clientvorrichtung (100) als ein eingebettetes System ausgebildet ist und ferner dazu ausgebildet ist, Daten für Echtzeitanwendungen als die Eingangsdaten zu verschlüsseln und zu versenden.

3. Clientvorrichtung (100) nach Anspruch 1 oder nach Anspruch 2, wobei die Clientvorrichtung (100) ferner dazu ausgebildet ist, die Eingangsdaten vor der Aufteilung in die Mehrzahl der Datenblöcke zu verarbeiten und/oder zu klassifizieren und/oder zu komprimieren.

4. Clientvorrichtung (100) nach einem der vorhergehenden Ansprüche, wobei die Clientvorrichtung (100) ferner dazu ausgebildet ist, die Blockchain-Daten als Eingangsdaten zu verarbeiten.

5. Clientvorrichtung (100) nach einem der vorhergehenden Ansprüche, wobei die Clientvorrichtung (100) als ein Edge-Controller ausgebildet ist und ferner dazu ausgebildet ist, am Rand eines Netzwerks eingesetzt zu werden.

6. Clientvorrichtung (100) nach einem der vorhergehenden Ansprüche, wobei die Clientvorrichtung (100) ferner dazu ausgebildet ist, den öffentlichen Schlüssel und den geheimen Schlüssel als Schlüsselpaar vorzusehen, und den geheimen Schlüssel per Streuspeicherverfahren zu speichern.

7. Clientvorrichtung (100) nach einem der vorhergehenden Ansprüche, wobei die Clientvorrichtung (100) ferner dazu ausgebildet ist, den öffentlichen Schlüssel in der Clientvorrichtung (100) physikalisch zu speichern.

8. Serveranordung (1000) für eine primäre Sicherungskettenanordnung, wobei die Serveranordung (1000) eine Mehrzahl von Servervorrichtungen (1100) umfasst, wobei jede einzelne Servervorrichtung (1100) der Mehrzahl der Servervorrichtungen (1100) aufweist:
- eine Empfängereinrichtung (1110), welche dazu ausgebildet ist, einen Ciphertext mit einer Speicherzeitsynchronisierung von einer Clientvorrichtung (100) über eine Internetverbindung zu empfangen; und
eine Speichereinrichtung (1120), welche mit der Empfängereinrichtung (1110) gekoppelt ist und welche dazu ausgebildet ist, den Ciphertext entsprechend der Speicherzeitsynchronisierung zu speichern.

9. Serveranordung nach Anspruch 8, wobei die Servervorrichtungen (1100) in einer gleichrangigen Ring-Topologie angeordnet sind.

10. Clientverfahren für eine Clientvorrichtung (100) für eine primäre Sicherungskettenanordnung, wobei das Clientverfahren folgende Verfahrensschritte umfasst:
- Aufteilen (S1) von Eingangsdaten in eine Mehrzahl an Datenblöcken mittels einer Verschlüsselungseinrichtung (110),
- Verschlüsseln (S2) von jedem einzelnen Datenblock der Mehrzahl der Datenblöcke mit Hilfe von:
i) einem öffentlichen Schlüssel einer Serveranordnung (1000);
ii) einem geheimen Schlüssel der Clientvorrichtung (100); und
iii) einer zufallsgenerierten Zählnummer
und, darauf basierend, Generieren von einen Ciphertext; und
- Generieren (S3) einer Speicherzeitsynchronisierung für den Ciphertext mit mittels einer Sendereinrichtung (120) und Versenden (S4) des Ciphertextes mit der Speicherzeitsynchronisierung über eine Internetverbindung an die Serveranordnung (1000).

11. Clientverfahren nach Anspruch 10, wobei das Clientverfahren ferner folgende Verfahrensschritte umfasst:
- Fragmentieren des zu versendenden Ciphertextes in eine Mehrzahl von Ciphertextfragmenten, wobei jedes einzelne Ciphertextfragment der Mehrzahl der Ciphertextfragmente eine Speicherzeitsynchronisierung aufweist.

12. Clientverfahren nach einem der vorhergehenden Ansprüche 10 bis 11, wobei der öffentliche Schlüssel und der geheime Schlüssel als Schlüsselpaar vorzusehen sind und der geheime Schlüssel per Streuspeicherverfahren gespeichert wird.

13. Clientverfahren nach einem der vorhergehenden Ansprüche 10 bis 12, wobei der öffentlichen Schlüssel in der Clientvorrichtung (100) physikalisch gespeichert wird.

14. Serververfahren für eine Serveranordung (1000) für eine primäre Sicherungskettenanordnung, wobei das Serververfahren folgende Verfahrensschritte umfasst:
- Empfangen (S101) von einem Ciphertext mit einer Speicherzeitsynchronisierung von einer Clientvorrichtung (100) über eine Internetverbindung mittels einer Empfängereinrichtung (1110); und
- Speichern (S102) des Ciphertextes entsprechend der Speicherzeitsynchronisierung mittels einer Speichereinrichtung (1120).

15. Computerprogrammprodukt, umfassend Befehle, die bei der Ausführung des Programms durch einen Computer diesen veranlassen, die Schritte des Verfahrens nach einem der vorhergehenden Ansprüche 10 bis 14 auszuführen.
